## Europäisches Patentamt

## European Patent Office

## Office européen des brevets

(19)

(11) Publication number: **0 124 400**
**B1**

(12) **EUROPEAN PATENT SPECIFICATION**

(45) Date of publication of patent specification: **07.01.88**

(51) Int. Cl.⁴: **F 16 D 65/16**

(21) Application number: **84400624.7**

(22) Date of filing: **28.03.84**

(54) Mechanical actuator for a disc brake.

(30) Priority: **01.04.83 US 481515**

(43) Date of publication of application:
**07.11.84 Bulletin 84/45**

(45) Publication of the grant of the patent:
**07.01.88 Bulletin 88/01**

(84) Designated Contracting States:
**DE FR GB IT**

(56) References cited:
**GB-A-1 172 580**
**GB-A-1 244 906**
**US-A-3 511 346**
**US-A-3 647 031**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Runkle, Dean E.**
**707 Gary Ct.**
**La Porte Indiana 46350 (US)**

(74) Representative: **Brullé, Jean et al**
**Service Brevets Bendix 44, rue François 1er**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a mechanical actuator for a disc brake wherein a double toggle cooperates with a cam shaft during rotation of the latter to engage a pair of friction elements with a disc or rotor.

A disc brake assembly usually comprises a caliper assembly which includes a bore with a piston assembly therein so that when fluid pressure is communicated to the bore during a service brake application, the caliper assembly engages the pair of friction elements with the rotor. During a parking brake application various devices, such as ball ramps or screw threads are known to mechanically actuate or bias the pair of friction elements into engagement with the disc. These mechanical actuators are not widely accepted for heavy vehicles such as trucks. With heavy trucks a separate brake is provided for the drive shaft, or the truck is equipped with drum brakes to capitalize on the drum brake parking assembly which is believed to be more reliable than a disc brake parking assembly.

The present invention has for its object to provide a mechanical actuator for a disc brake which can be fitted to a heavy truck for reliable braking when the parking brake is actuated. To this end the invention comprises a dual toggle mechanical actuator for a disc brake wherein a caliper assembly cooperates with at least one friction pad to engage the latter with a rotor, the caliper assembly including a housing with a bore receiving a piston assembly which is movable in the bore to engage the friction pad with the rotor, and a mechanical actuator including a cam shaft disposed in the bore for moving the piston assembly, the mechanical actuator comprising a pair of toggles located on opposite sides of the cam shaft, namely a reaction toggle cooperating with the cam shaft and an end wall of the housing and an output toggle disposed between the piston assembly and the cam shaft for imparting movement to the piston assembly in response to rotation of the cam shaft, the reaction toggle and output toggle cooperating with grooves of said cam shaft to define assymetric interfaces therebetween so that angular travel of said toggles is different when said cam shaft is rotated and said cam shaft moves in the direction of said piston assembly, the reaction toggle pivoting relative to said cam shaft and relative to said end wall during a first stage of braking when said cam shaft is rotated, and said reaction toggle moving with said cam shaft to pivot as a unit relative to said end wall during a second stage of braking, the output toggle approaching a lock position and the reaction toggle attaining a lock position relative to the respective grooves when said cam shaft has completed rotation wherein longitudinal center lines of the toggles remain a distance apart along a radius of said cam shaft so that the cam shaft may be counter-rotated easily to a rest position.

Mechanical actuators for disc brakes including two toggles or push rods are known, for instance by GB—A—1 172 580. This prior art, however, fails to disclose a "dual toggle" mechanical actuator as understood in the present invention. It merely illustrates a first toggle interposed between one side of the cam shaft and the top of a pivotal lever, and a second toggle or, more precisely, connecting member interposed between a lower portion of said pivotal lever and the piston assembly. Such a mechanism acts as a conventional force multiplying device and fails to provide any locking effect as obtained in the present invention through the provision of a reaction toggle and the respective locations of engagement of both toggles with opposite sides of the cam shaft.

It is an advantage of the present invention that a disc brake can be used for a heavy vehicle, such as a truck with a parking device incorporated therein so that a separate parking device for a drive shaft is not required.

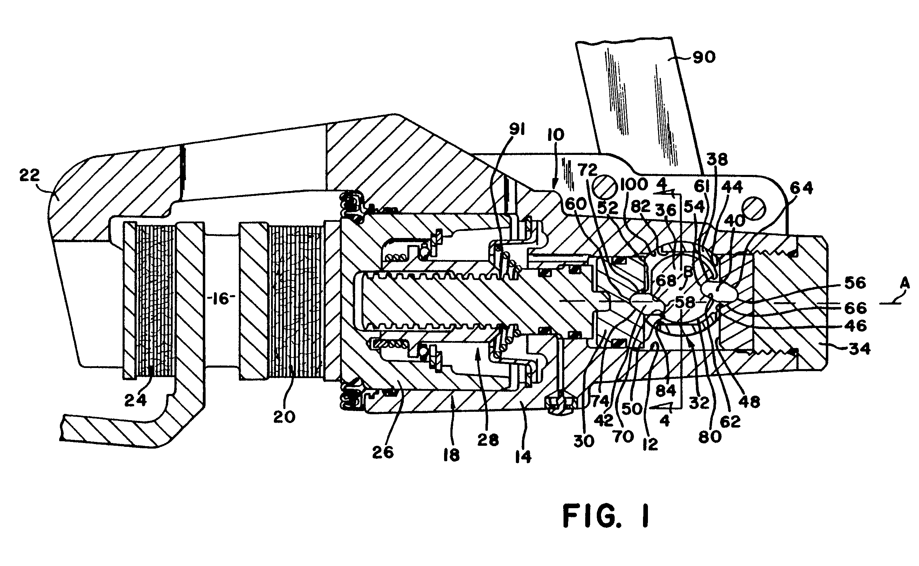

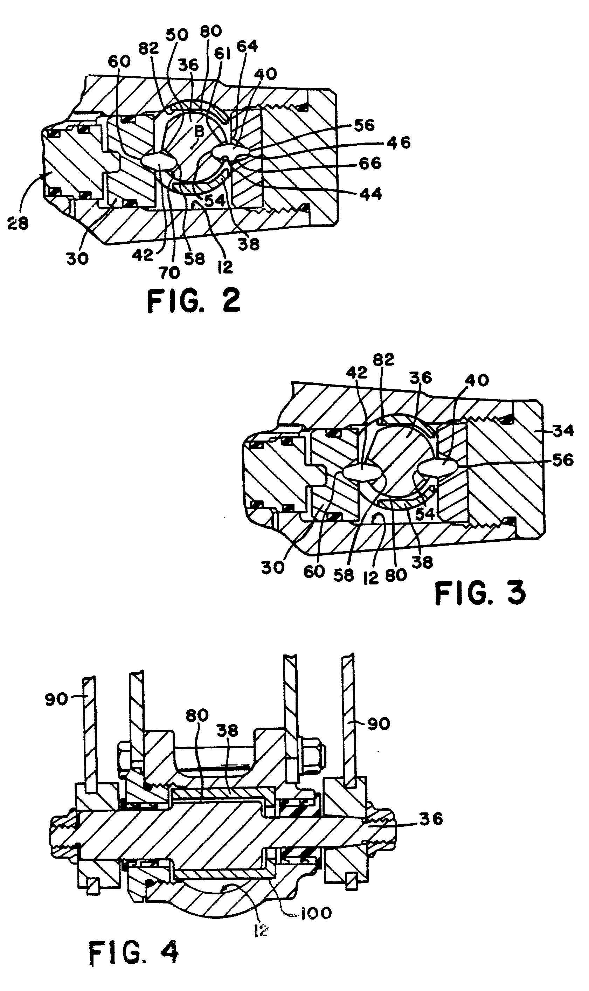

The invention will now be described with reference to the accompanying drawings, wherein Figure 1 is a side cross-sectional view of a disc brake assembly showing the mechanical actuator. Figure 2 is a view similar to a portion of Figure 1, but in a brake applied position, Figure 3 is similar to Figure 2 but in a fully applied position, and Figure 4 is a cross section view along line 4—4 of Figure 1.

The disc brake assembly includes a caliper assembly 10 with a bore 12 extending through an actuator leg 14 on one side of a rotor 16. The bore 12 receives a piston assembly 18 opposing a friction element 20 while a reaction leg 22 of the caliper assembly opposes a friction element 24. The piston assembly includes a first piston 26 directly engaging the friction element 20, an adjuster assembly 28 accommodating for lining wear to maintain a predetermined running clearance between the rotor and the friction elements, and a second piston 30 cooperating with a mechanical actuator 32, to be described hereinafter. A plug or cover 34 closes the end of the bore 12 remote from the rotor 16.

In accordance with the invention, the mechnical actuator 32 comprises a cam shaft 36 extending through the bore 12 near plug 34, a sleeve 38 supporting the cam shaft 36 within the bore 12, and a pair of toggles 40 and 42. Toggle 40 is a reaction toggle carried by a groove 44 in cam shaft 36 and a groove 46 formed by an end well 48 adjacent or secured to plug 34. Toggle 42 is an output toggle carried by a groove 50 in cam shaft 36 and a groove 52 in piston 30.

In Figure 1 the mechanical actuator is shown in a rest position. The bore 12 defines an axis A and cam shaft 36 defines a center B about which the cam shaft initially rotates. The center B is disposed above the axis A. The reaction toggle defines a moment at point 54 of groove 44 for cam shaft 36 and a reaction force is centered at point 56 of groove 46 for end wall 48. The output toggle defines a moment at point 58 of groove 50 for cam shaft 36 and an output force is centered at point 60 of groove 52 for piston 30. As shown at rest in figure 1, the point 60 is aligned with the bore axis A, the point 58 is below the axis A, the point 54 is above the center B, and the point 56 is between the center B and the axis A. The groove 44 is U-shaped with a top side 61 and a bottom side 62. Similarly, the groove 46 is U-shaped with a top side 64 and a bottom side 66. At rest, the reaction toggle 40 is in full engagement with the cam shaft groove bottom side 62 and the end wall groove top side 64 so that a locking engagement or stop is formed between the cam shaft, reaction toggle and end wall. In the same manner, the cam shaft groove 50 is U-shaped with a top side 68 and a bottom side 70. The piston groove 52 is U-shaped with a top side 72 and a bottom side 74. At rest, the output toggle 42 is in full engagement with the cam shaft groove top side 68 and the piston groove bottom side 74 so that a locking engagement or stop is formed between the cam shaft 36, output toggle and piston.

The reaction toggle 40 and the output toggle 42 are identical so that switching of these parts is possible. The end wall groove 46 and the piston groove 52 are not identical as the sides 64 and 66 of grooves 46 form an angle therebetween equal to 52 degrees while the sides 72 and 74 of groove 52 form an angle therebetween equal to 74 degrees. The cam shaft grooves 44 and 50 are not identical in shape or location. The sides 61 and 62 of groove 44 define an angle therebetween equal to about 54 degrees. As for location, the groove 44 at point 54 is disposed closer to center B so that a moment arm passing through point 54 will be closer to the center B than a moment arm passing through point 58 of groove 50. Conversely, the groove 50 disposes its point 58 closer to the outer edge or circumference 80 of cam shaft 36.

The sleeve 38 forms a vertical clearance via flat edges 82 and 84 with the circumference 80 of cam shaft 36 and is open in the direction of the rotor 16. The cam shaft is free to move axially and radially to a limited degree when rotated during operation in view of the flat edges 82 and 84.

The disc brake assembly operates in a conventional manner during a service brake application so that fluid pressure communicated to the bore 12 will urge the piston assembly to extend toward the rotor 16 to engage the friction element 20 with the rotor 16 and bias the caliper assembly to move the friction element 24 in engagement with the rotor 16.

During a parking brake application, a lever 90 coupled to the cam shaft 36 is rotated clockwise in Figure 1. The cam shaft 36 rotates clockwise about its Center B. Initially, the cam shaft is engaging the bottom flat edge 84 of sleeve 38. As the cam shaft 36 rotates clockwise, the reaction toggle 40 will rotate about the inner end of groove 46 in a counter clockwise direction to impart a first increment of axial travel to the cam shaft 36. The output toggle is also rotated about the inner end of groove 52. With the cam shaft rotating in a clockwise direction, the output toggle is rotated to impart a second increment of axial travel to the piston 30. The piston 30 experiences axial travel corresponding to the first increment and the second increment. However, in view of the location for the grooves 44 and 50, the first increment of travel for the cam shaft, output toggle and piston 30 is less than the second increment of travel for the output toggle and piston 30. Consequently, the piston 30 will move through a greater axial distance than the cam shaft 36.

In the applied position of Figure 2, the reaction toggle 40 is fully engaged with the bottom side 66 of groove 46 and the top side 61 of groove 44 to lock the reaction toggle and prevent further rotation of the cam shaft about its center B. However, the output toggle 42 remains spaced from the bottom side 70 of groove 50 and there remains a clearance between the flat edge 82 and the circumference 80 of cam shaft 36. In addition, the point 54 is now slightly below the point 56 and also below the center B. Further rotation of lever 90 causes the cam shaft 36 and the reaction toggle 40 to pivot as a unit about the bottom of groove 46 so that the cam shaft moves upwardly or radially in Figure 2. This upward movement of the cam shaft further rotates output toggle 42 toward a horizontal setting for point 58 and 60 to further move piston 30 to a fully applied position as shown in Figure 3.

It is understood that movement of the piston 30 causes the piston assembly to urge the friction element 20 into engagement with the rotor so that reaction forces will cause the caliper assembly to urge the friction element 24 into engagement with the rotor.

The caliper deflection, although slight, cooperates in combination with a return spring 91 and a suitable return spring coupled with lever 90 to return the parts of the mechanical actuator to their rest position upon termination of braking.

The caliper assembly includes a cross bore 100 which intersects bore 12 and the sleeve and cam shaft are disposed within the cross bore 100. Suitable seals or boots of flexible construction are disposed at the ends of the cross bore 100 to seal the sleeve and cam shaft to the caliper housing. With the piston 30 traveling a greater distance than the cam shaft 36 during operation of the mechanical actuator 32, the flexible seals or boots accommodate less movement of the cam shaft.

With the present invention, the cam shaft 36 is limited to 12—15 per cent of the movement of the piston 30. Moreover, at the applied position of Figure 2, the forces imparted to the piston 30 via toggle 42 are increased, when the cam shaft and reaction toggle rotate as a unit about the bottom of groove 46 near point 56, to fully engage the friction elements with the rotor and resist movement of the rotor relative to the caliper assembly.

**Claims**

1. A dual toggle mechanical actuator (32) for a disc brake wherein a caliper assembly (10) cooperates with at least one friction pad (20, 24) to engage the latter with a rotor (16), the caliper assembly including a housing with a bore (12) receiving a piston assembly (18) which is movable in the bore to engage the friction pad with the rotor, and a mechanical actuator including a cam shaft (36) disposed in the bore for moving the piston assembly, characterized in that the mechanical actuator comprises a pair of toggles located on opposite sides of the cam shaft (36), namely a reaction toggle (40) cooperating with the cam shaft and an end wall (48) of the housing and an output toggle (42) disposed between the piston assembly (18) and the cam shaft for imparting movement to the piston assembly in response to rotation of the cam shaft, the reaction toggle (40) and output toggle (42) cooperating with grooves (44, 50) of said cam shaft to define assymetric interfaces therebetween so that angular travel of said toggles is different when said cam shaft is rotated and said cam shaft moves in the direction of said piston assembly, the reaction toggle (40) pivoting relative to said cam shaft (36) and relative to said end wall (48) during a first stage of braking when said cam shaft is rotated, and said reaction toggle (40) moving with said cam shaft (36) to pivot as a unit relative to said end wall (48) during a second stage of braking, the output toggle (42) approaching a lock position and the reaction toggle (40) attaining a lock position relative to the respective grooves (50, 44) when said cam shaft has completed rotation wherein longitudinal center lines of the toggles remain a distance apart along a radius of said cam shaft so that the cam shaft may be counter-rotated easily to a rest position.

2. A mechanical actuator according to claim 1, characterized in that said cam shaft (36) moves in the direction of said piston assembly (18) in an amount equal to 12—15% of the movement for said piston assembly.

3. A mechanical actuator according to claim 1, characterized in that said reaction toggle (40) is disposed at a 13 degrees angle relative to a horizontal axis in a rest position and said output toggle (42) is disposed at a 16 degrees angle relative to the horizontal axis.

4. A mechanical actuator according to claim 3, characterized in that said output toggle (42) is disposed at a 7 degrees angle relative to the horizontal axis in an applied position and said reaction toggle (40) has moved past the horizontal axis in the applied position.

5. A mechanical actuator according to any of claims 1 to 4, in which said housing bore defines a horizontally extending center line (A), characterized in that said output toggle (42) engages said piston assembly (18) in a rest position at said bore center line, said cam shaft (36) defines a center (B) disposed above said bore center line, said reaction toggle (40) engages the end wall (48) of the housing in the rest position at a horizontal position between said cam shaft center (B) and said bore center line (A), and said reaction toggle (40) engages said cam shaft (36) in the rest position at a horizontal position above the center (B) of said cam shaft.

6. A mechanical actuator according to claim 5, characterized in that the engagement between said reaction toggle (40) and said cam shaft (36) moves horizontally below said cam shaft center (B) when said cam shaft is rotated to a brake applied position.

7. A mechanical actuator according to any of claims 1 to 6, characterized in that a sleeve (38) is disposed within said housing bore, said sleeve defining a clearance with said cam shaft (36) to permit said cam shaft to move axially and radially within said housing bore.

8. A mechanical actuator according to any of claims 1 to 7, characterized in that said cam shaft (36) moves substantially in a horizontal direction during the first stage and normal to the horizontal direction during the second stage of braking.

9. A mechanical actuator according to any of claims 1 to 8, characterized in that said reaction toggle (40) abuts said cam shaft (36) at a location closer to a center (B) for said cam shaft than said output toggle (42).

10. A mechanical actuator according to any of claims 1 to 9, characterized in that said output toggle (42) opposes rotation of said cam shaft (36) near an outer circumference therefor and said reaction toggle (40) opposes rotation of said cam shaft near a center therefore.

11. A mechanical actuator according to any of claims 1 to 10, characterized in that said cam shaft (36) defines a first groove (44) receiving said reaction toggle (40) and a second groove (50) receiving said output toggle (42) and said grooves define different sized openings on said cam shaft.

12. A mechanical actuator according to claim 11, characterized in that said first groove (44) is closer to a center (B) for said cam shaft (36).

13. A mechanical actuator according to any of claims 1 to 12, characterized in that said output toggle (42) defines an angle relative to a horizontal axis and said angle approaches said horizontal axis and crosses the same as the mechanical actuator moves from said one stage to said second stage of braking.

14. A mechanical actuator according to claim 13, characterized in that said reaction toggle (40) defines an angle relative to the horizontal axis and said angle approaches said horizontal axis as said mechanical actuator is operated in said one and second stages of braking.

15. A mechanical actuator according to any of claims 1 to 14, characterized in that it further comprises a sleeve (38) disposed in the bore and about said cam shaft (36), the movement of the cam shaft causing same to disengage one side of the sleeve and engage an opposite side of said sleeve.

16. A mechanical actuator according to claim 15, characterized in that the sleeve (38) extends about less than the entire circumference of said cam shaft (36) in order to permit said movement of the cam shaft.

## Patentansprüche

1. Mit zwei Kippgliedern versehene mechanische Betätigungseinheit (32) für eine Scheibenbremse, bei der eine Satteleinheit (10) mit mindestens einem Reibkissen (20, 24) zusammenwirkt, um dieses mit einem Rotor (16) in Eingriff zu bringen, wobei die Satteleinheit ein Gehäuse mit einer Bohrung (12), die eine Kolbeneinheit (18) aufnimmt, welche in der Bohrung bewegbar ist, um das Reibkissen mit dem Rotor in Eingriff zu bringen, und eine mechanische Betätigungseinheit aufweist, die eine Nockenwelle (36) besitzt, welche in der Bohrung zur Bewegung zur Bewegung der Kolbeneinheit angeordnet ist, dadurch gekennzeichnet, daß die mechanische Betätigungseinheit ein Paar Kippglieder aufweist, die auf gegenüberliegenden Seiten der Nockenwelle (36) angeordnet sind, nämlich ein Reaktionskippglied (40), das mit der Nockenwelle und einer Endwand (48) des Gehäuses zusammenwirkt, und ein Ausgangskippglied (42), das zwischen der Kolbeneinheit (18) und der Nockenwelle angeordnet ist, um in Abhängigkeit von einer Drehung der nockenwelle die Kolbeneinheit zu bewegen, wobei das reaktionskippglied (40) und das Ausgangskippglied (42) mit Nuten (44, 50) der Nokkenwelle zusammenwirken, so daß zwischen ihnen asymetrische Grenzflächen ausgebildet werden und die Winkelbewegung der Kippglieder unterschiedlich ist, wenn die Nockenwelle gedreht wird und sich in Richtung der Kolbeneinheit bewegt, wobei das Reaktionskippglied (40) sich relativ zur Nockenwelle (36) und relativ zur Endwand (48) während eines ersten Bremsstadiums verschwenkt, wenn die Nockenwelle gedreht wird, und sich mit der Nockenwell (36) bewegt, um während eines zweiten Bremsstadiums sich als Einheit relativ zur Endwand (48) zu verschwenken, und wobei das Reaktionskippglied (40) eine Verriegelungsstellung relativ zu den entsprechenden Nuten (50, 44) einnimmt, wenn die Nockenwelle ihre Drehung vervollständigt hat, so daß die Längsmittellinien der Kippglieder entlang einem Radius der Nockenwelle in einem Abstand voneinander verbleiben und die Nockenwelle in einfacher Weise im entgegengesetzten Sinn in eine Ruhelage gedreht werden kann.

2. Mechanische Betätigungseinheit nach Anspruch 1, dadurch gekennzeichnet, daß sich die Nockenwelle (36) in Richtung der Kolbeneinheit (18) um eine Strecke bewegt, die 12—15% der Bewegung der Kolbeneinheit entspricht.

3. Mechanische Betätigungseinheit nach Anspruch 1, dadurch gekennzeichnet, daß das Reaktionskippglied (40) in einer Ruhelage unter einem Winkel von 13° relativ zu einer Horizontalachse angeordnet ist, während das Ausgangskippglied (42) unter einem Winkel von 16° relativ zur Horizontalachse angeordnet ist.

4. Mechanische Betätigungseinheit nach Anspruch 3, dadurch gekennzeichnet, daß das Ausgangskippglied (42) in einer Einsatzstellung unter einem Winkel von 7° relativ zur Horizontalachse angeordnet ist, während sich das Reaktionskippglied (40) in der Einsatzstellung an der Horizontalachse vorbeibewegt hat.

5. Mechanische Betätigungseinheit nach einem der Ansprüche 1 bis 4, bei der die Gehäusebohrung eine horizontal verlaufende Mittelline (A) besitzt, dadurch gekennzeichnet, daß das Ausgangskippglied (42) in einer Ruhelage an der Mittellinie der Bohrung mit der Kolbeneinheit (18) in Eingriff steht, daß die Nockenwelle (36) einen Mittelpunkt (B) besitzt, der sich oberhalb der Mittellinie der Bohrung befindet, daß sich das Reaktionskippglied (40) in der Ruhelage an einer Horizontalstelle zwischen dem Mittelpunkt (B) der Nockenwelle und der Mittelline (A) der Bohrung mit der Endwand (48) des Gehäuses in Eingriff befindet und daß das Reaktionskippglied (40) in der Ruhelage an einer Horizontalstelle über dem Mittelpunkt (B) der Nockenwelle (36) mit dieser in Eingriff steht.

6. Mechanische Betätigungseinheit nach Anspruch 5, dadurch gekennzeichnet, daß sich die Eingriffsstelle zwischen dem Reaktionskippglied (40) und der Nockenwelle (36) in Horizontalrichtung unter den Mittelpunkt (B) der Nockenwelle bewegt, wenn die Nockenwelle in eine eingerückte Stellung der Bremse gedreht wird.

7. Mechanische Betätigungseinheit nach einem der Ansprüche 1 bis 6, dadurch gekennzeichnet, daß eine Buchse (38) innerhalb der Gehäusebohrung angeordnet ist, die in bezug auf die Nockenwelle (36) Spiel aufweist, so daß sich die Nockenwelle in Axial- und Radialrichtung innerhalb der Gehäusebohrung bewegen kann.

8. Mechanische Betätigungseinheit nach einem der Ansprüche 1 bis 7, dadurch gekennzeichnet, daß sich die Nockenwelle (36) während des ersten Bremsstadiums im wesentlichen in einer horizontalen Richtung und während des zweiten Bremsstadiums normal zur Horizontalrichtung bewegt.

9. Mechanische Betätigungseinheit nach einem der Ansprüche 1 bis 8, dadurch gekennzeichnet, daß das Reaktionskippglied (40) an einer Stelle gegen die Nockenwelle (36) stößt, die näher am Mittelpunkt (B) der Nockenwelle liegt als das Ausgangskippglied (42).

10. Mechanische Betätigungseinheit nach einem der Ansprüche 1 bis 9, dadurch gekennzeichnet, daß das Ausgangskippglied (42) einer Drehung der Nockenwelle (36) in der Nähe des Außenumfangs derselben entgegenwirkt, während das Reaktionskippglied (40) einer Drehung der Nockenwelle in der Nähe des Mittelpunktes derselben entgegenwirkt.

11. Mechanische Betätigungseinheit nach einem der Ansprüche 1 bis 10, dadurch gekennzeichnet, daß die Nockenwelle (36) eine erste Nut (44), die das Reaktionskippglied (40) aufnimmt, und eine zweite Nut (50) besitzt, die das Ausgangskippglied (42) aufnimmt, und daß die Nuten Öffnungen mit unterschiedlicher Größe an der Nockenwelle ausbilden.

12. Mechanische Betätigungseinheit nach Anspruch 11, dadurch gekennzeichnet, daß die erste Nuw (44) näher am Mittelpunkt (B) der Nockenwelle (36) liegt.

13. Mechanische Betätigungseinheit nach einem der Ansprüche 1 bis 12, dadurch gekennzeichnet, daß das Ausgangskippglied (42) unter einem Winkel relativ zu einer Horizontalachse angeordnet ist und daß sich dieser Winkel der Horizontalachse annähert und dieselbe kreuzt, wenn sich die mechanische Betätigungseinheit aus dem ersten Bremsstadium in das zweite Bremsstadium bewegt.

14. Mechanische Betätigungseinheit nach Anspruch 13, dadurch gekennzeichnet, daß das Reaktionskippglied (40) unter einem Winkel relativ zur Horizontalachse angeordnet ist und daß sich der Winkel der Horizontalachse nähert, wenn die mechanische Betätigungseinheit im ersten und zweiten Bremsstadium betätigt wird.

15. Mechanische Betätigungseinheit nach einem der Ansprüche 1 bis 14, dadurch gekennzeichnet, daß sie desweiteren eine Buchse (38) aufweist, die in der Bohrung und um die Nockenwelle (36) herum angeordnet ist, und daß die Bewegung der Nockenwelle bewirkt, daß diese mit einer Seite der Buchse außer Eingriff und mit einer gegenüberliegenden Seite der Buchse in Eingriff tritt.

16. Mechanische Betätigungseinheit nach Anspruch 15, dadurch gekennzeichnet, daß sich die Buchse (38) über weniger als den ganzen Umfang der Nockenwelle (36) erstreckt, um die Bewegung der Nockenwelle zu ermöglichen.

## Revendications

1. Dispositif d'actionnement mécanique (32) à double rotule pour un frein à disque, dans lequel un ensemble d'étrier (10) coopère avec au moins une garniture de friction (20, 24) pour appliquer cette dernière sur un rotor (16), l'ensemble d'étrier comprenant un boîtier avec un alésage (12) recevant un ensemble de piston (18) qui est mobile dans l'alésage afin d'appliquer la garniture de friction sur le rotor, et un dispositif d'actionnement mécanique comprenant un arbre à cames (36) disposé dans l'alésage pour déplacer l'ensemble de piston, caractérisé en ce que le dispositif d'actionnement mécanique comporte une paire de rotules disposées sur les côtés opposés de l'arbre à cames (36), à savoir une rotule de réaction (40) coopérant avec l'arbre à cames et une paroi d'extrémité (48) du boîtier et une rotule de sortie (42) disposée entre l'ensemble de piston (18) et l'arbre à cames pour imprimer un mouvement à l'ensemble de piston en réponse à la rotation de l'arbre à cames, la rotule de réaction (40) et la rotule de sortie (42) coopérant avec des rainures (44, 50) dudit arbre à cames pour définir entre elles des interfaces asymétriques, de sorte que la course angulaire desdites rotules est différente lorsque ledit arbre à cames tourne et lorsque ledit arbre à cames se déplace dans la direction dudit ensemble de piston, la rotule de réaction (40) pivotant par rapport audit arbre à cames (36) et par rapport à ladite paroi d'extrémité (48) pendant une première étape du freinage lorsque ledit arbre à cames est mis en rotation, et ladite rotule de réaction (40) se déplaçant avec ledit arbre à cames (36) pour pivoter en bloc par rapport à ladite paroi d'extrémité (48) pendant une seconde étape du freinage, la rotule de sortie (42) s'approchant d'une position de verrouillage et la rotule de réaction (40) atteignant une position de verrouillage par rapport à leur rainure (50, 44) respective lorsque ledit arbre à cames a achevé une rotation dans laquelle les axes longitudinaux des rotules restent écartés d'une certaine distance le long d'un rayon dudit arbre à cames de sorte que ledit arbre à cames peut aisément tourner en arrière jusqu'à une position de repos.

2. Dispositif d'actionnement mécanique suivant la revendication 1, caractérisé en ce que ledit arbre à cames (36) se déplace dans la direction dudit ensemble de piston (18) dans une mesure égale à 12—15% du mouvement pour ledit ensemble de piston.

3. Dispositif d'actionnement mécanique suivant la revendication 1, caractérisé en ce que ladite rotule de réaction (40) est disposée à un angle de 13 degrés par rapport à un axe horizontal dans une position de repos et ladite rotule de sortie (42) est disposée à un angle de 16 degrés par rapport à l'axe horizontal.

4. Dispositif d'actionnement mécanique suivant la revendication 3, caractérisé en ce que ladite rotule de sortie (42) est disposée à un angle de 7 degrés par rapport à l'axe horizontal dans une position appliquée et ladite rotule de réaction (40) s'est déplacée au-delà de l'axe horizontal dans la position appliquée.

5. Dispositif d'actionnement mécanique suivant l'une ou l'autres des revendications 1 à 4, dans lequel ledit alésage du boîtier définit un axe (A) disposé horizontalement, caractérisé en ce que ladite rotule de sortie (42) attaque ledit ensemble de piston (18), dans une position de repos, sur ledit axe de l'alésage, ledit arbre à cames (36) définit un centre (B) disposé au-dessus dudit axe de l'alésage, ladite rotule de réaction (40) attaque la paroi d'extrémité (48) du boîtier, dans la position de repos, en une position horizontale située entre ledit centre (B), de l'arbre à cames et ledit axe (A) de l'alésage, et ladite rotule de réaction (40) attaque ledit arbre à cames (36), dans la position de repos, en une position horizontale située au-dessus du centre (B) dudit arbre à cames.

6. Dispositif d'actionnement mécanique suivant la revendication 5, caractérisé en ce que la zone de contact entre ladite rotule de réaction (40) et ledit arbre à cames (36) se déplace horizontalement sous ledit centre (B) de l'arbre à cames lorsque ledit arbre à cames est mis en rotation jusqu'à une position d'application des freins.

7. Dispositif d'actionnement mécanique suivant l'une ou l'autre des revendications 1 à 6, caractérisé en ce qu'un manchon (38) est disposé à l'intérieur dudit alésage du boîtier, ledit manchon définissant un jeu avec ledit arbre à cames (36) pour permettre audit arbre à cames de se déplacer axialement et radialement à l'intérieur dudit alésage du boîtier.

8. Dispositif d'actionnement mécanique suivant l'une ou l'autre des revendications 1 à 7, caractérisé en ce que ledit arbre à cames (36) se déplace substantiellement dans une direction horizontale pendant la première étape et normalement à la direction horizontale pendant la seconde étape du freinage.

9. Dispositif d'actionnement mécanique suivant l'une ou l'autre des revendications 1 à 8, caractérisé en ce que ladite rotule de réaction (40) bute contre ledit arbre à cames (36) en un endroit plus proche du centre (B) dudit arbre à cames que ladite rotule de sortie (42).

10. Dispositif d'actionnement mécanique suivant l'une ou l'autre des revendications 1 à 9, caractérisé en ce que ladite rotule de sortie (42) s'oppose à la rotation dudit arbre à cames (36) à proximité d'une circonférence extérieure de celui-ci et ladite rotule de réaction (40) s'oppose à la rotation dudit arbre à cames à proximité du centre de celui-ci.

11. Dispositif d'actionnement mécanique suivant l'une ou l'autre des revendications 1 à 10, caractérisé en ce que ledit arbre à cames (36) définit une première rainure (44) recevant ladite rotule de réaction (40) et une seconde rainure (50) recevant ladite rotule de sortie (42) et en ce que lesdites rainures définissent des ouvertures de différentes largeurs sur ledit arbre à cames.

12. Dispositif d'actionnement mécanique suivant la revendication 11, caractérisé en ce que ladite première rainure (44) est plus proche d'un centre (B) dudit arbre à cames (36).

13. Dispositif d'actionnement mécanique suivant l'une ou l'autre des revendications 1 à 12, caractérisé en ce que ladite rotule de sortie (42) définit un angle par rapport à un axe horizontal et en ce que ledit angle s'approche dudit axe horizontal et croise ce dernier lorsque le dispositif d'actionnement mécanique se déplace de ladite première étape à ladite seconde étape du freinage.

14. Dispositif d'actionnement mécanique suivant la revendication 13, caractérisé en ce que ladite rotule de réaction (40) définit un angle par rapport à l'axe horizontal et en ce que ledit angle s'approche dudit axe horizontal lorsque ledit dispositif d'actionnement mécanique est actionné dans lesdites première et seconde étapes du freinage.

15. Dispositif d'actionnement mécanique suivant l'une ou l'autre des revendications 1 à 14, caractérisé en ce qu'il comporte en outre un manchon (38) disposé dans l'alésage et autour dudit arbre à cames (36), le mouvement de l'arbre à cames obligeant ce dernier à se dégager d'un côté du manchon et à s'engager d'un côté opposé dudit manchon.

16. Dispositif d'actionnement mécanique suivant la revendication 15, caractérisé en ce que manchon (38) s'étend autour de moins que la circonférence entière dudit arbre à cames (36) afin de permettre ledit mouvement de l'arbre à cames.

FIG. I

**FIG. 2**

**FIG. 3**

**FIG. 4**